(19) Europäisches Patentamt
European Patent Office
Office européen des brevets

(11) **EP 2 575 402 A1**

(12) **EUROPEAN PATENT APPLICATION**

(43) Date of publication:
**03.04.2013 Bulletin 2013/14**

(51) Int Cl.:
**H04W 68/02** (2009.01)

(21) Application number: **11306258.2**

(22) Date of filing: **30.09.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Alcatel Lucent**
**75007 Paris (FR)**

(72) Inventors:
• **Worrall, Chandrika**
**Newbury, Berkshire RG14 6SN (GB)**
• **Palat, Sudeep**
**Swindon, SN5 6EE (GB)**

(74) Representative: **2SPL Patentanwälte**
**Postfach 15 17 23**
**80050 München (DE)**

(54) **Method For Paging User Equipment In A Wireless Communication Network, Corresponding User Equipment And Network Node**

(57)    The present invention relates to a method for paging a user equipment in a wireless communication network, said user equipment being under the coverage of a cell, herein called victim cell, said victim cell being subject to interference from another cell, herein called aggressor cell, an almost blank subframe mechanism being available for minimising interference caused by said aggressor cell on said user equipment.

According to the present invention, method comprising the steps of:
- determining subframes corresponding to paging occasions in said victim cell;
- determining subframes to be used as almost blank subframes by said aggressor cell;
- selecting a subframe being both a almost blank subframe and a paging occasion and listening by said user equipment for paging request in said selected subframe.

## Fig. 3

**Description**

**BACKGROUND OF THE INVENTION**

The present invention relates in particular to a method for paging user equipment in a wireless network.

Modern communication networks as the 3G Long Term Evolution (LTE) defined as part of the 3GPP standardization foresees a densification of the network. Especially Heterogeneous networks have been introduced where macro cells superpose with smaller cells as femto, pico cells or relays to better match the local needs in term of coverage and bandwidth while optimizing the power consumption.

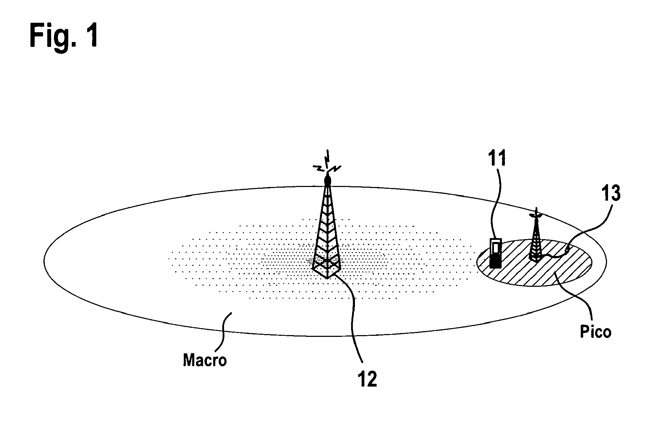

Figure 1 shows a heterogeneous network environment with a pico cell and a macro cell. A user terminal 11 is located under the coverage of both a macro cell 12 and a pico cell 13. User equipment 11 is subject to received signal from macro cell 12 at a signal level well above noise floor. In case user terminal 11 is connected to pico cell 13, the signal received from macro cell 12 is experienced as high interference dramatically affecting the ability of user equipment 11 to communicate properly with pico cell 13. Seen from user equipment 11 point of view, pico cell 13 is a "victim cell" victim of interference from macro cell 12 as "aggressor cell".

In the context of heterogeneous networks, interference situations are created due to the superposition of different types of cells.

This interference situation affecting user equipments in a zone covered by several cells (e.g. macrocell / picocell) is endangering the availability of basic functionality of the network as paging.

Paging has been implemented since the beginning in wireless communication networks. Some important services / functionality rely on paging as the update of system information on the one hand but also services as Earthquake and Tsunami Warning Services (ETWS), or Commercial Mobile Alerting Systems (CMAS) on the other hand.

It is an object of the invention to provide for reliable paging even in the context of heterogeneous networks.

Another object of the invention is to provide user equipments and network nodes adapted to resolve the issue addressed above in the context of heterogeneous networks.

**SUMMARY OF THE INVENTION**

These objects, and others that appear below, are achieved by a method for paging a user equipment in a wireless communication network according to claim 1, a corresponding user equipment according to claim 8 and a corresponding network node according to claim 13.

According to the present invention, an almost blank subframe mechanism is put in place in order to coordinate the interference caused on a "victim cell" by an "aggressor" cell. A determination takes place to get information on the paging occasions in the "victim cell". Based on the almost blank subframe information and on the paging occasions, a subframe is determined where the user equipment can listen to paging requests without suffering from interference by the aggressor cell since the paging requests are timely corresponding to almost blank subframes.

In a first embodiment of the invention, the user equipment is provided information by a network node on almost blank subframes as they are foreseen in the aggressor cell. In case the user equipment detects interference by the aggressor cell while listening for a paging occasion, the user equipment calculates the position of a subsequent paging occasion corresponding to one almost blank subframe as reported by the network node. The user equipment then listens to the paging request at the determined position.

In a second embodiment of the invention, while the user equipment is experiencing strong interference from an aggressor cell, the user equipment is automatically scheduled on almost blank subframes by the network. When the user equipment is using discontinuous reception in connected mode, the user equipment can rely on the fact that the "on duration" part of the DRX cycle superposes with an almost blank subframe, in this embodiment the user equipment listens to the paging requests during the "on duration part of the DRX cycle.

In a third embodiment of the present invention, the network calculates if and when almost blank subframes correspond to paging occasions of the user equipment. The network node then uses a signaling mechanism to indicate to the user equipment on which subframe it should read the paging request.

The method according to the present invention presents the advantage to use the relationship between the almost blank subframe and the paging occasions to find an appropriate subframe corresponding both to an almost blank subframe and a paging occasion in the victim cell. Consequently, there is no need to modify the almost blank subframe or the paging occasion or the Discontinuous Reception mechanisms to be able to properly receive paging request even in the context of heterogeneous networks. According to the invention only the timepoint when the user equipment listens to the paging requests needs to be modified.

Further advantageous features of the invention are defined in the dependent claims.

**BRIEF DESCRIPTION OF THE DRAWINGS**

Other characteristics and advantages of the invention will appear on reading the following description of a preferred embodiment given by way of non-limiting illustrations, and from the accompanying drawings, in which:

- Figure 1 shows an heterogeneous network environment with a pico and a macro cell;
- Figure 2 shows an implementation of paging as well as almost blank subframes;
- Figure 3 shows a first implementation of paging according to the present invention;
- Figure 4 shows a second implementation of paging according to the present invention;
- Figure 5 shows a third implementation of paging according to the present invention;
- Figure 6 shows a user equipment according to the present invention;
- Figure 7 shows a network node according to the present invention.

**DETAILED DESCRIPTION OF THE INVENTION**

The functions of the various elements shown in the Figures, including any functional blocks labeled as 'processors', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' or 'controller' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any boxes shown in the Figures are conceptual only. Their function may be carried out through the operation of program logic, through dedicated logic, through the interaction of program control and dedicated logic, or even manually, the particular technique being selectable by the implementer as more specifically understood from the context.

Figure 1 has been described in connection with prior art.

It will be understood by those skilled in the art, that the example used in figure 1 could be extended to any network configuration where cell coverage overlaps even also partly, whatever the size of the cells overlapping (macro, micro, pico, femto). Consequently, the teachings of this invention can be used in any configuration where an "aggressor" cell generates interference on a "victim" cell.

According to the present invention the interference coordination mechanism based on almost blank subframes ensures a reliable reception of paging requests at the user equipment 11.

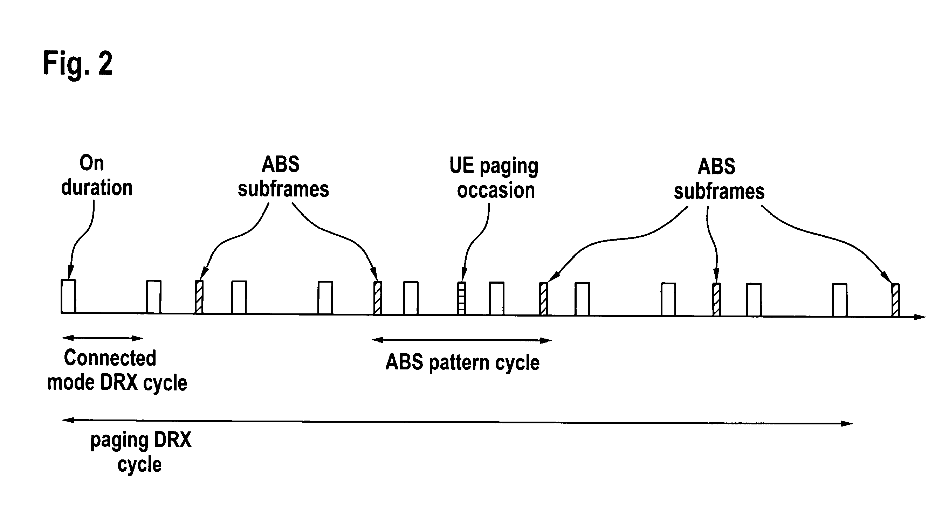

Figure 2 shows an implementation of paging as well as an implementation of almost blank subframes. A time line is showing almost blank subframes and user equipment paging occasions as calculated by the network in a usual manner.

In order to cope with the interference produced by the aggressor cell on the victim cell, an almost blank subframe mechanism is put in place in for protecting some subframes hence to have reduced or less interference to the neighboring cells, Almost blank subframe patterns are coordinated across different cells in time thanks to backhaul signalling or OAM.

Almost blank subframes in an aggressor cell are used to protect resources in subframes in the victim cell receiving strong inter-cell interference. Almost blank subframe are subframes with reduced transmit power (possibly including even no transmission at all) on some physical channels and/or reduced activity.

Preferably, it is up to the network (e.g. eNB) to decided how many subframes are allocated as almost blank subframe. This may depend on the cell load, the number of UEs in the overlapping area between aggressor and victim cell, etc...

Some almost blank subframe configurations used for performance requirements may be but not limited to 1 almost blank subframe every 8 subframe, or 1 every 16 subframe. It will be understood by those skilled in the art that any other arrangement of almost blank subframe can be envisageable in the context of the present invention.

Moreover, the almost blank subframe pattern may be adaptable over time depending for example on the cell load.

Paging requests are used by the network for informing user equipment while in connected mode about system information changes, or as support for Earthquake and Tsunami Warning Services, or Commercial Mobile Alerting Systems. According to the current standards, paging occasions are determined for user equipment in a cell. The paging requests are then transmitted on the predefined paging occasion on a Physical Downlink Control Channel (PDCCH) identifiable by a Paging Radio Network Temporary Identifier (P-RNTI).

Figure 2 further illustrates further discontinuous reception (DRX) while the user equipment is in connected mode. This mechanism is put in place in order to save battery live at the user equipment. The user equipment only checks for the control channel PDCCH during the "on duration" part of the DRX cycle. If there is a PDCCH signalized for the UE during "on duration", the UE listens to next few subframes for PDCCH. This extended PDCCH reading is called "active time". Thus the active time may be equal or longer than "on duration" depending on the UE activity. Outside the active time, the user equipment doesn't read PDCCH until the next "on duration" defined by the DRX cycle.

In addition to the connected DRX cycle, a "paging DRX cycle" is foreseen. Paging DE2X is applicable for both connected and idle UEs. "paging DRX" is used to wake the user equipment up for paging signal. The user equipment is required to listen to the paging channel once during the paging DRX cycle. When in connected mode, the user equipment obeys both connected DRX cycle and paging DRX cycle.

More precisely in the context of LTE network paging occasions are defined during the paging DRX cycle the following way:

One Paging Occasion (PO) is a subframe where there may be P-RNTI transmitted on PDCCH addressing the paging message.

One Paging Frame (PF) is one Radio Frame, which may contain one or multiple Paging Occasion(s). When paging DRX is used the user equipment needs only to monitor one paging occasion per paging DRX cycle.

PF and PO is determined by following formulae using the paging DRX parameters provided in System Information:

PF is given by following equation:

$$SFN \bmod T = (T \text{ div } N)*(UE\_ID \bmod N)$$

Index i_s pointing to PO from subframe pattern is derived from the following calculation:

$$i\_s = floor(UE\_ID/N) \bmod Ns$$

System Information paging DRX parameters stored in the user equipment shall be updated locally in the UE whenever the paging DRX parameter values are changed in SI. The following Parameters are used for the calculation of the PF and i_s:

- T: DRX cycle of the UE. T is determined by the shortest of the user equipment specific paging DRX value, if allocated by upper layers, and a default DRX value broadcast in system information..
- nB: 4T, 2T, T, T/2, T/4, T/8, T/16, T/32.
- N: min(T,nB)
- Ns: max(1,nB/T)
- UE_ID: IMSI mod 1024.

IMSI is given as sequence of digits of type Integer (0..9), IMSI shall in the formulae above be interpreted as a decimal integer number, where the first digit given in the sequence represents the highest order digit.

Example of Paging Subframe Patterns for FDD

| Ns | PO when i_s=0 | PO when i_s=1 | PO when i_s=2 | PO when i_s=3 |
|---|---|---|---|---|
| 1 | 9 | N/A | N/A | N/A |
| 2 | 4 | 9 | N/A | N/A |
| 4 | 0 | 4 | 5 | 9 |

Example of Paging subframe patterns for TDD

| Ns | PO when i_s=0 | PO when i_s=1 | PO when i_s=2 | PO when i_s=3 |
|---|---|---|---|---|
| 1 | 0 | N/A | N/A | N/A |
| 2 | 0 | 5 | N/A | N/A |
| 4 | 0 | 1 | 5 | 6 |

From these definitions, subframes representing paging occasions in a cell can determined for a cell (for example as shown above: subframes #9, #4, #5, #0 for FDD or #0, #1, #5, #6 for TDD can be paging occasions in a cell).

In prior art, each user equipment only listens to paging requests at one paging occasion per paging DRX cycle.

Consequently, as shown on figure 2, it is obvious that the probability that a paging occasion corresponds to an almost blank subframe is low resulting in non acceptable interference on paging requests.

Since in existing systems there is only one paging occasion per paging DRX cycle and per user equipment, if the UE would wait until its own next paging occasion corresponding with an almost blank subframe, then the delay for listening to the paging request would be much too long. A solution to this problem is presented in the present invention.

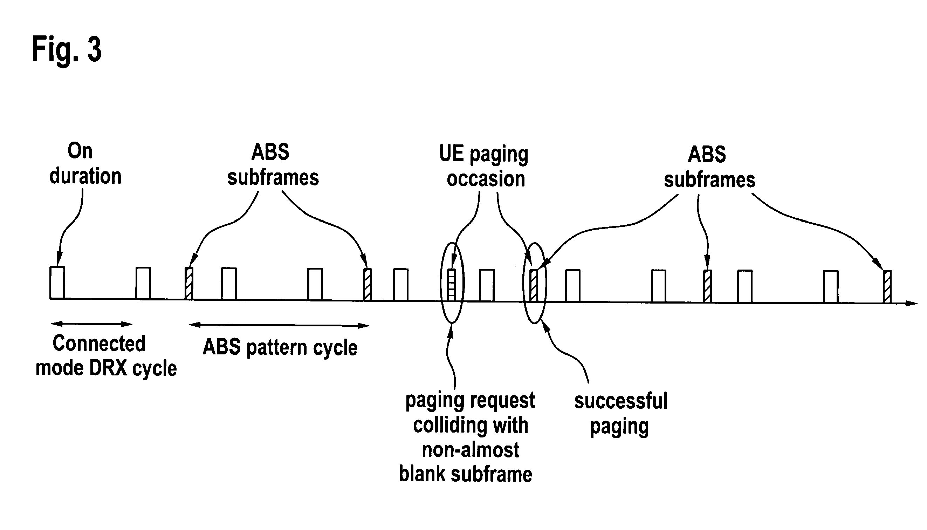

Figure 3 shows a first implementation of paging according to the present invention. Starting from the prior art paging mechanism, a collision between the paging request and a non almost blank subframe is detected. This collision is detected when the paging request is subject to too high interference to be decoded properly. The collision detection is performed using known methods not part of the present invention.

In this first embodiment of the present invention, the user equipment is informed by the network on the almost blank subframe periodicity enabling it to deduce which subframes corresponds to almost blank subframes.

Starting from this information, and being triggered by the collision detection, the user equipment determines at least one further paging occasions in the cell according to the present invention.

The user equipment then listens during this determined subframe in order to get the paging request received properly.

In connected mode, paging is used to signal changes of system information, Earthquake and Tsunami Warning Services, or Commercial Mobile Alerting Systems which are common to all user equipments located in the victim cell. Consequently, the paging requests are common for all user equipments. Hence the user equipment can listen to this information at a paging occasion foreseen for a different user equipment in the victim cell without creating collision. This is possible since the paging signal is transmitted with common P-RNTI on the PDCCH resulting in no collision between paging for different user equipments.

Preferably, in case of connected mode Discontinuous Reception, the determination of at least one further paging occasion is performed according to the method of determination of paging occasions described in connection with Figure 2. Preferably, the determination of subframes corresponding to paging occasions in connected mode Discontinuous Reception depends on the Discontinuous Reception Cycle duration (T) used for the user equipment and on the User equipment IMSI.

It will be understood by those skilled in the art that the user equipment does not need to use the connected mode Discontinuous reception in the framework of the invention. The present invention only requires that the paging occasions are coinciding with almost blank subframes regardless if connected mode Discontinuous reception is activated on not. The use of connected mode Discontinuous Reception only provides the advantage of further saving battery power at the user terminal.

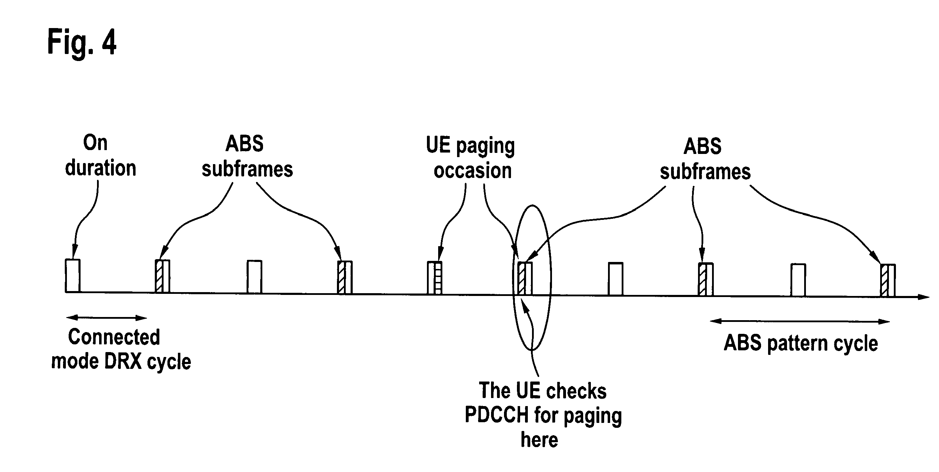

Figure 4 shows a second implementation of paging. According to this embodiment, since the user equipment is experiencing strong interference from the aggressor cell, the user equipment can only be scheduled in an almost blank subframe to guarantee reliable reception. This happens automatically at scheduler level. Consequently, user equipment's "on duration" period as defined previously for the connected mode DRX cycle are aligned with almost blank subframes, when the UE is configured for DRX operation. According to the present embodiment, the user equipment listens to the paging requests during the "on duration" period of the connected mode DRX cycle. This enables to receive the reliable paging reception since at least one almost blank subframe aligns with a paging subframe of the cell.

In this embodiment, the user equipment does not need to be informed on the position of the almost blank subframes used in the cell. However, the user equipment redefines the "on duration" part of the connected mode DRX cycle as paging occasion.

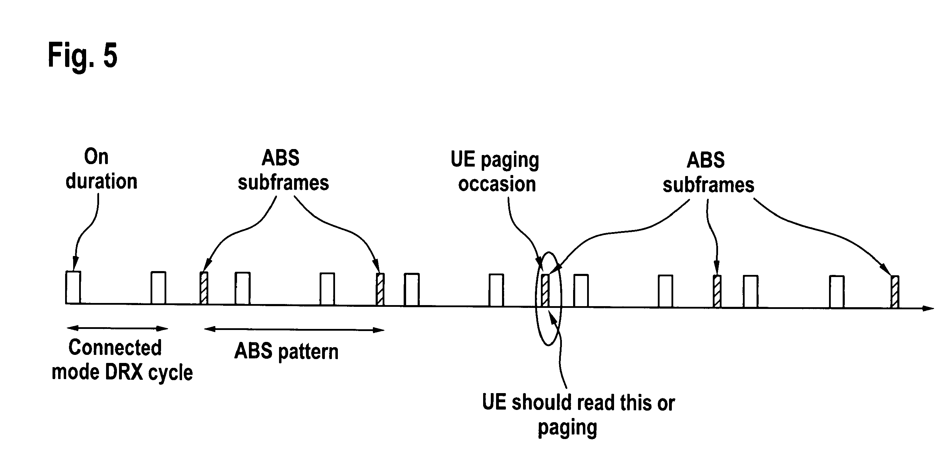

Figure 5 shows a third implementation of paging according to the present invention. According to this embodiment, the user equipment in the victim cell is provided with information on the almost blank subframes to use for paging by the network.

A dedicated signalling message (e.g. RRC signalling) is preferably used to tell the user equipment to which subframe it should be listening for getting paging requests.

This subframe has been determined in advance by the network as an almost blank subframe corresponding also to a paging opportunity for the user equipment.

The entity in the network making this determination could possibly be a scheduler which would communicate the determination to the base station of the victim cell. It will be understood by those skilled in the art that other network entity could be used for performing the determination.

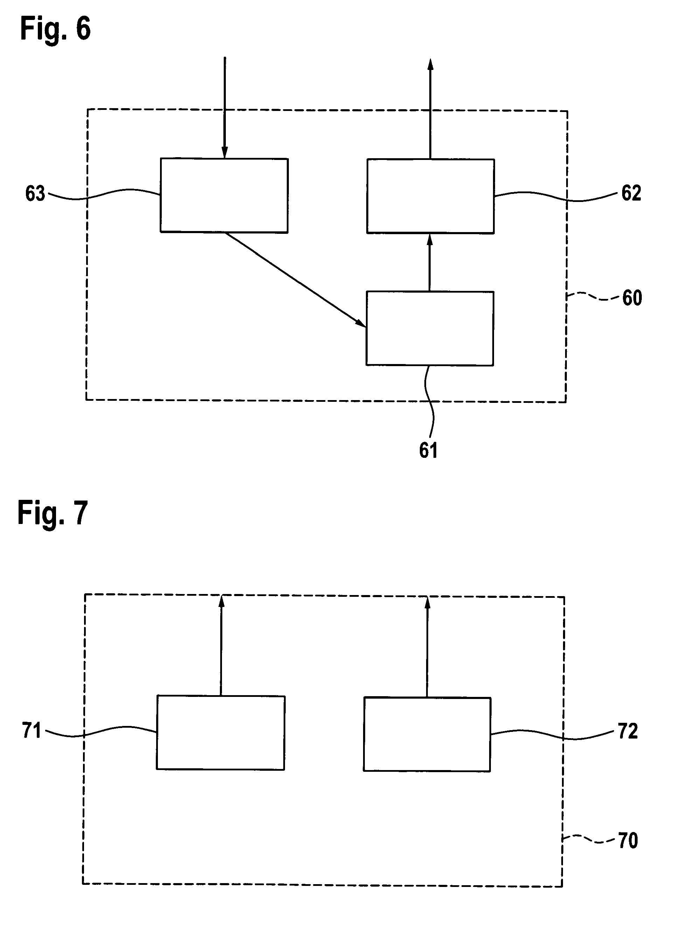

Figure 6 shows a user equipment 60 according to the present invention. User equipment 60 is part of a wireless communication network located under the coverage of a cell, called victim cell, which is subject to interference from another cell, called aggressor cell. An almost blank subframe mechanism is available in the network for minimising interference caused by the aggressor cell on user equipment 60.

According to the present invention, user equipment 60 comprises means 61 for selecting a subframe being both an almost blank subframe and a paging occasion and means 62 for listening to paging request in the selected subframe .

In a first embodiment of the invention, user equipment 60 comprises means 63 for receiving from the network an indication on almost blank subframes as available in the victim cell, user equipment 60 calculating itself inside means 61 which paging occasion correspond to an almost blank subframe as reported by means 63.

In a second embodiment user equipment is in connected mode Discontinuous Reception, means 61 selects a subframe part of the "on duration" part of the connected mode DRX cycle.

In a third embodiment, means 61 are passively receiving an instruction from the network indicating which subframe has to be used for listening to paging requests, knowing that the network will have determined this subframe to be both a almost blank subframe and a paging occasion for user equipment 60.

Figure 7 shows a network node according to the present invention. Network node 70 is part of a wireless communication network serving a cell, called victim cell, subject to interference from another cell, called aggressor cell. An almost blank subframe mechanism is available in the network for minimising interference caused by the aggressor cell in the victim cell. Network node 70 comprises means 71 for informing user equipment under the coverage of the victim cell on available almost blank subframes and /or means 72 for informing the user equipment on almost blank subframes to use for listening to paging requests.

## Claims

1. Method for paging a user equipment in a wireless communication network, said user equipment being under the coverage of a cell, herein called victim cell, said victim cell being subject to interference from another cell, herein called aggressor cell, an almost blank subframe mechanism being available for minimising interference caused by said aggressor cell on said user equipment, said method comprising the steps of:

   - determining subframes corresponding to paging occasions in said victim cell;
   - determining subframes to be used as almost blank subframes by said aggressor cell;
   - selecting a subframe being both a almost blank subframe and a paging occasion and listening by said user equipment for paging request in said selected subframe.

2. Method according to claim 1, wherein said user equipment uses Discontinuous Reception in connected mode.

3. Method according to claim 1, wherein said paging is destined to said user equipment in connected mode, said paging informing on system information change, supporting Earthquake and Tsunami Warning Services, or Commercial Mobile Alerting Systems.

4. Method according to claim 2, wherein the determination of subframes corresponding to paging occasions in Discontinuous Reception depends on the Discontinuous Reception Cycle duration at said user equipment and on the User equipment IMSI.

5. Method according to claim 1, comprising a step of detecting collision between a paging request and an non-almost blank subframe, said collision triggering the determination of a new paging occasion corresponding to an almost blank subframe.

6. Method according to claim 1, wherein said user equipment is provided with information on almost blank subframes foreseen in said aggressor cell.

7. Method according to claim 1, wherein said user equipment is provided with information on a subframe to use for listening for paging requests said subframe corresponding to an almost blank subframe and to a paging occasion, said information being provided by a network node.

8. User equipment part of a wireless communication network being under the coverage of a cell, herein called victim cell, said victim cell being subject to interference from another cell, herein called aggressor cell, an almost blank subframe mechanism being available for minimising interference caused by said aggressor cell on said user equipment, said user equipment comprising:

  - means for selecting a subframe being both an almost blank subframe and a paging occasion and
  - means for listening to paging request in said selected subframe.

9. User equipment according to claim 8, comprising a module for receiving information from a network node on almost blank subframes foreseen in said aggressor cell.

10. User equipment according to claim 8, comprising a module for receiving information on a subframe to use for listening for paging requests said subframe corresponding to an almost blank subframe and to a paging occasion, said information being provided by a network node.

11. User equipment according to claim 8, comprising a module for determining subframes corresponding to paging occasions in said victim cell, said paging occasion depending on the Discontinuous Reception Cycle duration at said user equipment and on the User equipment IMSI.

12. User equipment according to claim 8, comprising means for detecting collision between a paging request and an non-almost blank subframe said collision triggering the determination of a new paging occasion corresponding to an almost blank subframe.

13. Network node part of a wireless communication network serving a cell, herein called victim cell, said victim cell being subject to interference from another cell, herein called aggressor cell, an almost blank subframe mechanism being available for minimising interference caused by said aggressor cell in said victim cell, said network node comprising means for informing a user equipment under the coverage of said victim cell on available almost blank subframes and /or means for informing said user equipment on almost blank subframes to use for listening to paging requests.

# Fig. 1

# Fig. 2

On duration

ABS subframes

UE paging occasion

ABS subframes

Connected mode DRX cycle

ABS pattern cycle

paging DRX cycle

EP 2 575 402 A1

Fig. 3

Fig. 4

On duration

ABS subframes

UE paging occasion

The UE checks PDCCH for paging here

ABS subframes

ABS pattern cycle

Connected mode DRX cycle

# Fig. 5

On duration

ABS subframes

UE paging occasion

ABS subframes

Connected mode DRX cycle

ABS pattern

UE should read this or paging

EP 2 575 402 A1

## Fig. 6

63

62

60

61

## Fig. 7

71

72

70

Europäisches
Patentamt

European
Patent Office

Office européen
des brevets

# EUROPEAN SEARCH REPORT

Application Number

EP 11 30 6258

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ITRI: "Paging consideration for eICIC", 3GPP TSG-RAN WG2 #75, R2-114218, 16 August 2011 (2011-08-16), pages 1-3, XP002664063, Retrieved from the Internet: URL:http://www.3gpp.org/ftp/tsg_ran/WG2_RL 2/TSGR2_75/Docs/ [retrieved on 2011-11-21] | 1,4,6,8, 9,11,13 | INV. H04W68/02 |
| Y | * the whole document * | 2 | |
| X | Renesas Mobile Europe Ltd.: "eICIC on Idle Mode considerations", 3GPP TSG-RAN WG2 #75, R2-114050, 16 August 2011 (2011-08-16), pages 1-4, XP002664064, Retrieved from the Internet: URL:http://www.3gpp.org/ftp/tsg_ran/WG2_RL 2/TSGR2_75/Docs/ [retrieved on 2011-11-21] * page 1, paragraph 1 * * page 2, paragraph 3.1 - page 3, paragraph 3.2 * * figures 1, 2 * | 13 | |
| | | | TECHNICAL FIELDS SEARCHED (IPC) |
| | | | H04W |
| Y | HUAWEI ET AL: "Consideration on DRX in eICIC scenario", 3GPP DRAFT RAN WG2; R2-111021, 14 February 2011 (2011-02-14), XP050493546, Taipei, Taiwan * page 1, paragraph 1 * * page 1, paragraph 2.1 - page 2, paragraph 2.1 * | 2 | |

-/--

The present search report has been drawn up for all claims

| Place of search | Date of completion of the search | Examiner |
|---|---|---|
| Munich | 21 February 2012 | Rosenauer, Hubert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 11 30 6258

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | QUALCOMM INCORPORATED: "eICIC: Idle Mode discussion", 3GPP DRAFT RAN WG2; R2-106344, 9 November 2010 (2010-11-09), XP050492241, * page 1, paragraph 2.1 - page 2, paragraph 2.1 * | 1,8,13 | |
| T | Alcatel-Lucent: "Connected mode paging enhancement", 3GPP TSG-RAN WG2 #75bis, R2-115347, 3 October 2011 (2011-10-03), pages 1-2, XP002664065, Retrieved from the Internet: URL:http://www.3gpp.org/ftp/tsg_ran/WG2_RL 2/TSGR2_75bis/Docs/ [retrieved on 2011-11-21] * the whole document * | 1-13 | |

TECHNICAL FIELDS
SEARCHED          (IPC)

The present search report has been drawn up for all claims

| Place of search | Date of completion of the search | Examiner |
|---|---|---|
| Munich | 21 February 2012 | Rosenauer, Hubert |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)